# EUROPEAN PATENT SPECIFICATION

(11) **EP 3 757 554 B1**
(45) Date of publication and mention of the grant of the patent: **25.02.2026**
(21) Application number: 20181669.1
(22) Date of filing: 23.06.2020
(51) Int. Cl.: G01N 21/95

(54) **A METHOD FOR MONITORING AND OPTIONALLY CONTROLLING THE LONGITUDINAL SEAL OF A PACKAGE MATERIAL IN A PACKAGING AND FILLING MACHINE**
VERFAHREN ZUM ÜBERWACHEN UND WAHLWEISEN STEUERN DER LÄNGSVERSIEGELUNG EINES VERPACKUNGSMATERIALS IN EINER VERPACKUNGS- UND FÜLLMASCHINE
PROCÉDÉ PERMETTANT DE SURVEILLER ET DE COMMANDER ÉVENTUELLEMENT L'OPERCULE LONGITUDINAL D'UN MATÉRIAU D'EMBALLAGE DANS UNE MACHINE DE CONDITIONNEMENT ET DE REMPLISSAGE

(30) Priority: 27.06.2019 EP 19182893
(43) Date of publication of application: 30.12.2020
(73) Proprietor: Tetra Laval Holdings & Finance S.A., 1009 Pully (CH)
(72) Inventor: Brehas, Alessandro, 41122 Modena (IT); Maltoni, Luca, 47121 Forli (IT); Martinez Garcia, Ruben, 22227 Lund (SE)
(74) Representative: Tetra Pak Patent Attorneys

(56) References cited:
- WO-A1-2012/173562
- DE-A1- 10 023 000
- US-A1- 2006 026 929
- US-A1- 2006 109 013
- US-B1- 6 751 925

## Description

### Technical field

The invention generally relates to the field of packaging technology, such as food packaging technology. More particularly, it is presented methods and apparatuses for controlling the longitudinal seal of carton-based packaging material for packages holding liquid food products.

### Background

Today it is commonly known to use roll-fed packaging machines for different types of food products, e.g. milk. The roll-fed packaging machines, also referred to as filling machines, have several advantages. One is that a continuous production of packages makes it possible to achieve higher speeds compared to blanks-fed packaging systems. Another advantage is that by continuously filling a tube of packaging material and forming packages in a lower end of the tube, a risk that unwanted microorganisms enter the packages can be lowered.

The packaging material is provided with a longitudinal seal to form a tube. Thereafter, the tube shaped packaging material is filled with liquid food product, and finally transversal sealings are made to provide the final food package. The speed of the package forming is very high and the production is continuous. Thus, if something should happen to go wrong with e.g. the longitudinal sealing process the number of packages needed to be discarded is very high. Also, the production line may need to be shut down, adjusted, and cleaned and sanitized before production may be initiated again. This poses a substantial impact on product provision from an economic, environmental, safety, and time perspective.

Thus, there is a demand for finding better ways to ensure sufficient package performance. Documents US2006/0026929 A1 and US6751925 B1 are examples of known filling apparatus that may be of interest for the application.

### Summary

It is an object to at least partly overcome one or more of the aboveidentified limitations of the prior art. In particular, it is an object to provide ways of controlling the longitudinal seal of packaging material in a packaging and filling machine. With the solutions provided herein a lot of time and resources may be minimized and the process control is increased. The downtime of the packaging machine is minimized, and the amount of waste, such as finished product waste, due to defect longitudinal sealings may be decreased in a sufficient manner. Also, the product safety and durability are better secured with the present solutions.

According to a first aspect it is provided a method for monitoring and optionally controlling a longitudinal seal of a package material in a packaging and filling machine, according to claim 1.

Still other objectives, features, aspects and advantages will appear from the following detailed description as well as from the drawings.

### Short description of the drawings

Embodiments will now be described, by way of example, with reference to the accompanying schematic drawings, in which
Fig. 1 is a general illustration of a roll-fed packaging machine.
Fig. 2 is a schematic view of the pipings 200 including the encasing pipe 204 and filling pipe 104, 202.

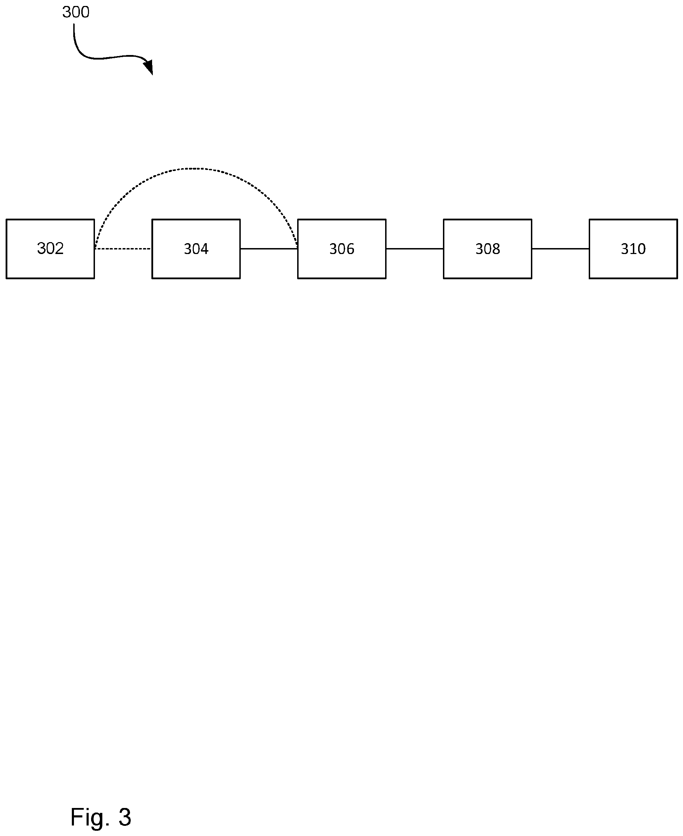

Fig. 3 is a chart illustrating a method monitoring and controlling of the longitudinal sealing.
Fig. 4 illustrates a quality control system configured to perform a quality control of the longitudinal sealing according to one example.
Fig. 5 illustrates how arrays of data can be compared in the quality control system.
Fig. 6 illustrates another example of the quality control system.

### Detailed description

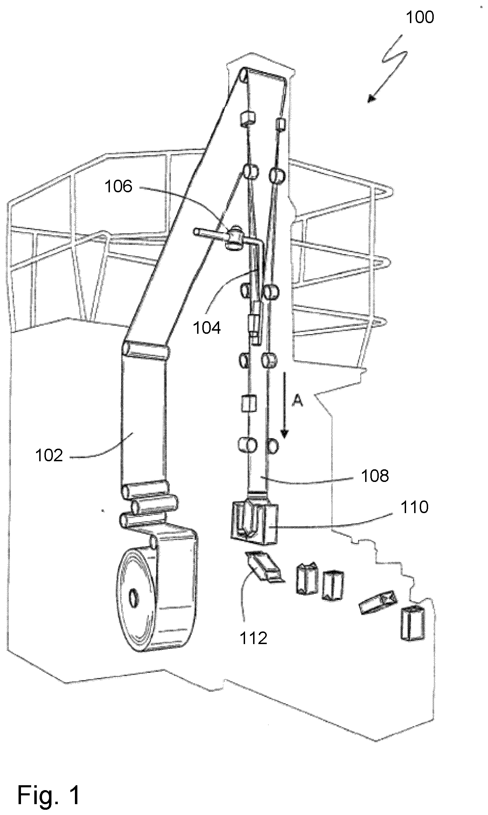

With reference to Fig. 1, a packaging machine 100, sometimes also referred to as a filling machine, is generally illustrated by way of example. The packaging machine 100 is a roll-fed packaging machine used for packaging liquid food products in carton-based packages. Already in the 1940s this type of packaging machines was introduced by Tetra Pak, and it is today a well-known approach for packaging milk and other liquid food products in a safe and cost-efficient manner. The general approach can also be used for nonliquid food products, such as potato crisps.

Today, packaging material is often printed and prepared in packaging material production centers, also referred to as converting factories, and is shipped to a site where the packaging machine 100 is placed, e.g. a dairy. Usually the packaging material is loaded onto a reel before being transported. After arriving at the site, the reel is placed in the packaging machine as illustrated in fig. 1.

During production a web 102 of packaging material can be fed from the reel through the packaging machine in a web feeding direction A. Even though not illustrated in fig. 1, the packaging material may pass through a sterilization device, e.g. a hydrogen peroxide bath or an LVEB (Low-Voltage Electron Beam) station, for ensuring that the web 102 is free from unwanted microorganisms. Before providing the food product, a tube can be formed from the web 102 by forming a longitudinal sealing. The food product can be fed into the tube via a filling pipe 104 and a valve 106 may be used for regulating a flow through the filling pipe 104. A lower end 108 of the tube can be fed into a folding device 110 in which a transversal sealing is made, the tube is folded according to folding lines, also referred to as weakening lines, and cut off such that packages 112 can be formed. Even though the folding device 110 is illustrated as one single device, the folding device 110 may comprise a number of different devices.

A package seal control system 300 comprises a control unit 308; and data recording means 306 adapted to be communicatively connected to the control unit 308; wherein said data recording means 306 is adapted to monitor a longitudinal seal 302 extending in a direction conforming to a direction of flow, also considered a web feeding direction A, of a packaging material.

The system 300 may comprise:
a control unit 308; and
data recording means 306 adapted to be communicatively connected to the control unit 308;
wherein said data recording means 306 is adapted to monitor a longitudinal seal 302 extending in a direction conforming to a direction of flow, also considered a web feeding direction A, of a packaging material exiting a longitudinal sealing device adapted to seal opposite longitudinal side edges of the packaging material into a tubular form.

The data recording means 306 adapted to monitor the longitudinal seal 302 may be positioned downstream of the longitudinal sealing device in a direction conforming to direction of flow of the packaging material. The data recording means 306 is positioned outside said aseptic chamber of the packaging and filling machine 100.

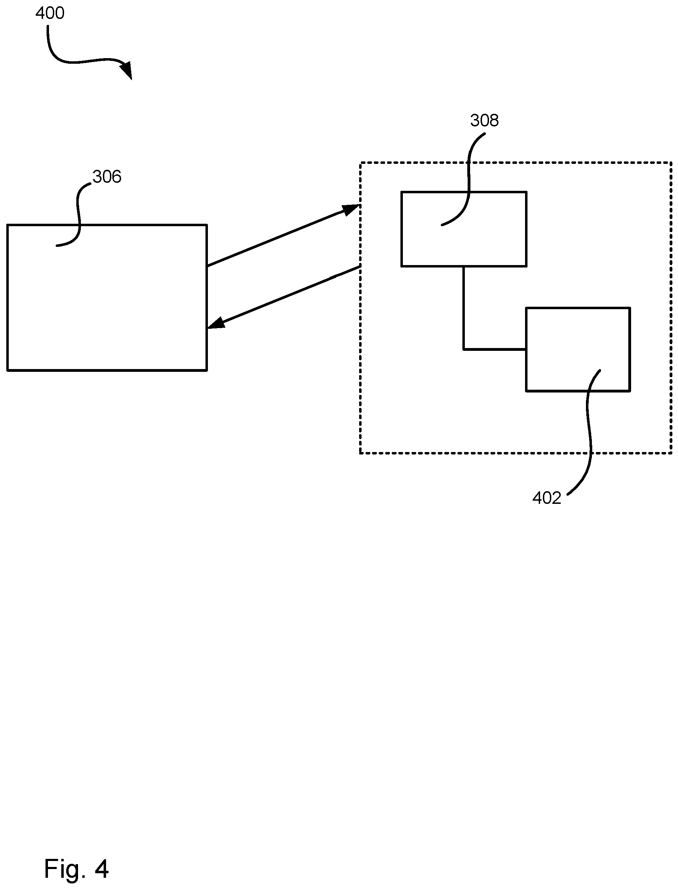

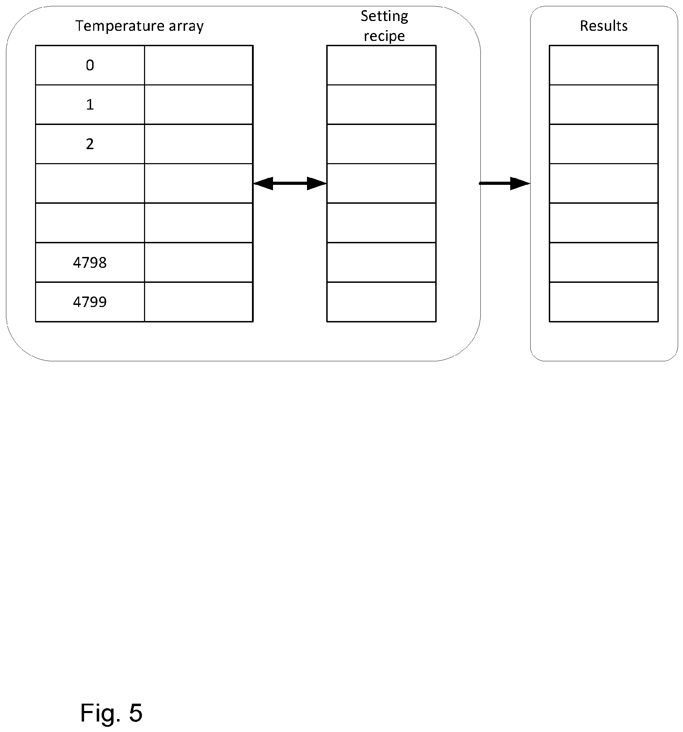

The data recording means 306 may comprise a camera or a vision system, preferably adapted to record coloring and/or an image as spectral data and spatial data of the longitudinal seal on said package material in tubular form. As a non-limiting example, the coloring may be directly related to a temperature. As yet another non-limiting example, the data recording means 306 may comprise a heat camera, which will be discussed in more detail in connection with Figs 4 and 5.

The data recording means 306 may be communicatively connected to the control unit 308 using wireless communication and/or wired communication.

Due to the conditions at and in the vicinity of the longitudinal sealing device where the longitudinal seal 302 is provided to the package material, it is beneficial to not have the data recording means 306 positioned in the vicinity thereof. The available space around the longitudinal sealing device is very limited. In addition, the processing conditions and the safety requirements around the longitudinal sealing device may make it difficult to have data recording means 306 positioned there. The temperature may be quite high in said area of the longitudinal seal monitoring which may pose a problem for the data recording means.

The data recording means 306 is connected to a fiber optic cable 304. The fiber optic cable 304 is positioned to inspect the longitudinal seal 302 of the package material in tubular form.

The fiber optic cable 304 is in one end connected to the data recording means 306 and in the opposite end adapted to monitor the longitudinal seal 302 extending in a direction conforming to a direction of flow of the packaging material. This means that the data recording means 306 adapted to monitor the longitudinal seal extending in a direction conforming to a direction of flow of the packaging material is positioned outside the aseptic chamber. The fiber optic cable 304 connected to the data recording means 306 is in its other end be positioned in the vicinity of the longitudinal sealing device to monitor the longitudinal seal 302 provided to package material. The fiber optic cable 304 may be adapted to cope with and withstand the conditions at and in the vicinity of the longitudinal sealing device.

The package seal control system 300 comprise a fiber optic cable 304, with one end attached to the data recording means 306, and the other end positioned downstream of the longitudinal sealing device in a direction conforming to direction of flow of the packaging material to allow monitoring of the longitudinal seal 302.

The package seal control system 300 may comprise an encasing pipe 204 adapted to enclose the fiber optic cable 304.

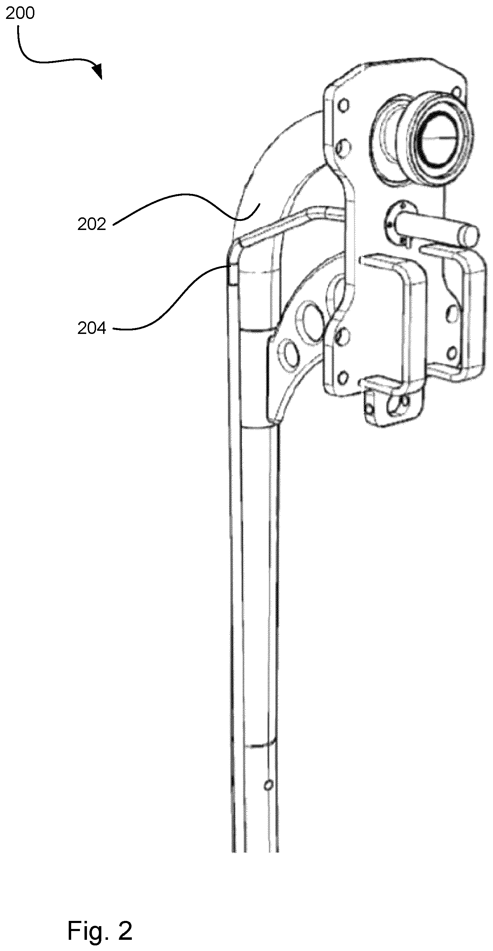

The fiber optic cable 304 may be adapted to fit in inside the encasing pipe 204. The encasing pipe 204 may be attached to a filling pipe 104, 202 of a packaging and filling machine 100. The encasing pipe 204 may be welded or glued to filling pipe 104, 202. Figure 2 discloses a schematic view of the pipings 200 including the encasing pipe 204 and filling pipe 104, 202.

The fiber optic cable 304 may be positioned within the encasing pipe 204 for protecting the fiber optic cable 304 e.g. from the conditions within the aseptic chamber and/or conditions in the vicinity of the in the longitudinal sealing device. This way the fiber optic cable's area of contact to the conditions within the aseptic chamber and/or conditions in the vicinity of the in the longitudinal sealing device is minimized. For example, only the end of the fiber optic cable 304, preferably the utmost end, may be subjected to said conditions. Using the fiber optic cable 304 the data recording means 306 is able to monitor the conditions of the longitudinal seal 302 provided. The encasing pipe 204 may have many purposes whereof one is protecting the fiber optic cable. Another purpose of the encasing pipe 204 may be ease of sterilization of the equipment around the longitudinal sealing device, and maybe of the whole aseptic chamber surrounding the longitudinal sealing device.

The end of the fiber optic cable 304 not attached to said data recording means 306 may be attached to or inserted into a hole of the encasing pipe 204, said hole being provided downstream of the longitudinal sealing device in a direction conforming to direction of flow of the packaging material, preferably in the vicinity of the longitudinal sealing device. The hole of the encasing pipe 204 may be positioned above a liquid level of the longitudinally sealed package material.

The hole of the encasing pipe 204 may be positioned upstream an outlet of the filling pipe 104, 202 in a direction conforming to direction of flow of the packaging material.

The hole of the encasing pipe 204 may be positioned in the vicinity of the longitudinal sealing device, such as above any liquid level of the longitudinally sealed packaging material in a tubular form or before any transversal sealing device.

The package seal control system 300 may comprise a light source adapted to illuminate an area of the longitudinally sealed package material being monitored by the data recording means. A light source may be provided to allow better visual perception of the longitudinal seal provided. The light source may be positioned so that light is shed upon the longitudinal seal being monitored by the data recording means. The light source may be incorporated within the data recording means 306. If, the light source is incorporated into the data recording means 306, any fiber optic cable 304 connected to said data recording means 306 for use in monitoring the longitudinal seal may also be able to transmit light from the data recording means 306 to the other end of the fiber optic cable 304 to allow light to be shed over the longitudinal seal 302 being monitored.

The light source may use visible light, infrared (IR) light, ultraviolet (UV) light, or any combination thereof. The light source may provide visible light at wave lengths of about 380 to 740 nanometers (nm). The light source may provide IR light at wave lengths of about 740 nm to 1 mm. The light source may provide UV light at wave lengths of about 1 to 380 nm.

The light provided by the light source may be polarized. The polarization may be selected from linear polarization, circular polarization, elliptical polarization, or any combination thereof. When a package material contains a metal foil, e.g. aluminium foil, the use of polarized light may make the monitoring of the longitudinal seal easier in terms of detection of nonconformances.

The data recording means 306 is able to detect and record the colour, and image, i.e. shape and position, of the longitudinal seal. The colour and image are based on spectral data and spatial data gathered during the production of the longitudinal seal of the package material.

The control unit 308 may have a database, a file, a data processor for receiving data and correlate the received data on visual colour and/or image (spectral data and spatial data) with at least a predetermined set point colour and/or image (spectral data and/or spatial data) value, and displaying for a user, which user may be connected to a network.

The visual colour and/or image value provided from data recording means 306 in terms of spectral data and spatial data of the longitudinal seal may in the control unit 308 be compared and correlated with at least a predetermined set point colour and/or image value, which value is predetermined set point spectral data and/or spatial data of the longitudinal seal. The control unit 308 may further include further data to be used such as data for type of equipment, temperature ranges, seal type, and package, which may provide additional accuracy in the longitudinal seal assessment.

The control unit 308 may be connected to a remote control unit 310 via the network, the remote control unit 310 having user interface capability, so that data of the longitudinal sealing process may be transferred from the control unit 308 to be displayed for a user being connected to the remote control unit 310 via the network.

The remote control unit 310 may be located in a cloud-based computing environment. The remote control unit 310 may be a virtual control unit. The remote control unit 310 may have a database, a file, a data processor for receiving data and correlate the received data on visual colour and/or image (spectral data and spatial data) with at least a predetermined set point colour and/or image (spectral data and/or spatial data) value and displaying for a user connected to the network.

The control unit 308 having user interface capability, so that data of the longitudinal sealing process may be displayed for a user being connected to the control unit 308 via the network.

The control unit 308 may be adapted to control the longitudinal sealing device to adjust the amount of heating and/or electricity to produce the longitudinal seal, such as by increasing or decreasing the heating temperature and/or increasing or decreasing electricity amount.

The control unit 308 may be adapted to control packaging and filling machine to shut it down, and optionally start it up again, to allow the longitudinal sealing device to adjust the amount of heating and/or electricity to produce the longitudinal seal, such as by increasing or decreasing the heating temperature and/or increasing or decreasing electricity amount.

The package seal control system 300 may comprise a discarding device.

The control unit 308 may be adapted to control a discarding device, which discarding device is adapted to remove from the packaging and filling machine an amount of finished filled packages produced during a time period of defect longitudinal seal indicated by the control unit 308 based on received data correlated with said at least predetermined set point value(s).

The control unit 308 may contain a lot of data of the materials, and equipment used, including also positioning of the equipment, etc. The control unit 308 assists the data recording means 306 with interpretation of monitored findings. The control unit 308 may include predetermined or pre-set input data relating to type of packaging material and its constituents, positioning of the longitudinal seal, positioning of ends of the packaging material having been longitudinally sealed, power and electricity input for the longitudinal sealing, the type of light used, e.g. wavelength and/or optional polarization, etc. Such predetermined input data are then used together and correlated with the values obtained from the continuously monitoring of the longitudinal seal, as continuous monitored input data. The obtained output data from the correlation of the different input data may then be used to control the package seal system.

It is to be noted that machine learning algorithms may be included into the control unit 308 to allow improved accuracy of assessments overtime of the monitored longitudinal seal's spectral data and spatial data to provide improvements of the longitudinal seal's position, condition, and performance.

The present package seal control system 300 comprise:
a longitudinal sealing device adapted to seal opposite longitudinal side edges of a packaging material into a tubular form, and a longitudinal seal 302 to extend in a direction conforming to a direction of flow A of the packaging material;
an encasing pipe 204 attached to a filling pipe 104, 202 of a packaging and filling machine 100;
a fiber optic cable 304 adapted to fit in the encasing pipe 204 attached to the filling pipe 104, 202;
data recording means 306, containing a light source, attached to said fiber optic cable 304; and
a control unit 308;
wherein the fiber optic cable 304 is in one end attached to said data recording means 306 and in the other end attached to or inserted into a hole of the encasing pipe 204, said hole being provided downstream the longitudinal sealing device in a direction conforming to direction of flow of the packaging material, preferably in the vicinity of the longitudinal sealing device.

A package seal control upgrade kit to be applied on packaging and filling machines, comprising:
a control unit 308; and
data recording means 306 communicatively connected to the control unit;
wherein said data recording means 306 is adapted to monitor a longitudinal seal 302 extending in a direction conforming to a direction of flow of a packaging material in a packaging and filling machine 100, wherein the packaging material may be exiting a longitudinal sealing device adapted to seal opposite longitudinal side edges of the packaging material into a tubular form. The data recording means 306 may comprise a camera or a vision system, preferably adapted to record colouring and/or an image, as spectral data and spatial data, of the longitudinal seal on said package material in tubular form. As a non-limiting example, the coloring may be directly related to a temperature. As yet another non-limiting example, the data recording means 306 may comprise a heat camera, which will be discussed in more detail in connection with Figs 4 and 5.

The package seal control upgrade kit may comprise a light source adapted to illuminate an area of the longitudinally sealed package material being monitored by the data recording means 306.

The package seal control upgrade kit may comprise a fiber optic cable 304, adapted to be attached with one end to the data recording means 306, and the other end positioned downstream of a longitudinal sealing device in the packaging and filling machine, in a direction conforming to direction of flow of the packaging material to allow monitoring of the longitudinal seal.

The package seal control upgrade kit may comprise an encasing pipe adapted to enclose the fiber optic cable, and preferably adapted to be attached to a filling pipe 104, 202 of the packaging and filling machine 100.

A method for monitoring and optionally controlling a longitudinal seal 302 of a package material in a packaging and filling machine 100, comprising the steps of:
providing a longitudinal seal 302 to a package material using a sealing device, wherein opposite longitudinal side edges of a packaging material are provided with said seal to forming the packaging material into a tubular form, and the longitudinal seal extends in a direction conforming to a direction of flow of the packaging material;
monitoring the longitudinal seal 302 of the package material in a tubular form using data recording means 306; and
optionally controlling the longitudinal seal 302 of the package material in a tubular form using a control unit 308, wherein the control unit 308 receives data from the data recording means 306 and correlate the received data with at least a predetermined set point value to provide output data determining the longitudinal seal's condition, and optionally displaying the output data for a user, which user may be connected to a network.

The control unit 308 may further control the longitudinal sealing device to adjust the amount of heating and/or electricity to produce the longitudinal seal, such as by increasing or decreasing the heating temperature and/or increasing or decreasing electricity amount.

The control unit 308 may control the packaging and filling machine 100 to shut it down, and optionally start it up again, to allow the longitudinal sealing device to adjust the amount of heating and/or electricity to produce the longitudinal seal 302, such as by increasing or decreasing the heating temperature and/or increasing or decreasing electricity amount.

The control unit 308 may control a discarding device, which remove from the packaging and filling machine 100 an amount of finished filled packages produced during a time period of defect longitudinal seal indicated by the control unit 308 based on received data correlated with said at least predetermined set point value(s).

A fiber optic cable 304 is used with the data recording means 306 for monitoring the longitudinal seal 302 of the package material in a tubular form. The method for monitoring and optionally controlling a longitudinal seal 302 of a package material in a packaging and filling machine 100, may comprise the steps of:
providing a longitudinal seal 302 to a package material using a sealing device, wherein opposite longitudinal side edges of a packaging material are provided with said seal to forming the packaging material into a tubular form, and the longitudinal seal extends in a direction conforming to a direction of flow of the packaging material;
monitoring the longitudinal seal 302 of the package material in a tubular form using a fiber optic cable 304 and data recording means 306 attached to said fiber optic cable 304; and
optionally controlling the longitudinal seal 302 of the package material in a tubular form using a control unit 308, wherein the control unit 308 receives data from the data recording means 306 and correlate the received data with at least a predetermined set point value to provide output data determining the longitudinal seal's condition, and optionally displaying the output data for a user, which user may be connected to a network.

Predetermined input data providing a predetermined set point value may be based on input relating to type of packaging material and its constituents, positioning of the longitudinal seal, positioning of ends of the packaging material having been longitudinally sealed, power and electricity input for the longitudinal sealing, the type of light used, e.g. wavelength and/or optional polarization, and experience relating to spectral and spatial data of longitudinal seal measurements, such as prior measurements made.

The data received by the control unit 308 from the recording means 306 and the predetermined set point value(s) may be based on visual colour and/or image. The received data on visual colour and/or image (spectral data and spatial data) may be correlated with at least a predetermined set point colour and/or image (spectral data and/or spatial data) value.

The fiber optic cable 304 may be provided downstream the longitudinal sealing device in a direction conforming to direction of flow of the packaging material.

A method of evaluating the quality of a longitudinal seal of a liquid food package material comprising:
providing a longitudinal seal to a package material,
monitoring the longitudinal seal of the package material to determine if the seal is defect in view of a predetermined value/threshold, which defect, if present, would increase the likelihood of spoilage of a liquid food product contained in a package of said package material.

The package seal control system may be used for monitoring and optionally controlling the longitudinal seal of a package material in a packaging and filling machine 100.

The package seal control upgrade kit may be installed at a packaging and filling machine 100 for monitoring and optionally controlling the longitudinal seal of a package material in said packaging and filling machine 100.

With reference to Fig. 4, a quality control system 400 configured to perform a quality control of the longitudinal sealing is illustrated by way of example. The quality control system 400 may comprise the data recording means 306, the control unit 308 and the database 402. The data recording means 306 may be configured to transmit image data to the control unit 308. The data recording means 308 may be configured to receive commands from the control unit 308. The control unit 308 may be configured to transmit information, e.g. the image data to the database 402. Further, the database 402 may be configured to store the information received from the control unit 308.

The packaging material is heated in order to be longitudinally and transversally sealed. The heating process can be done in different ways. If the material has a layer of aluminium, it may be possible to use induction technology. Further, it may also be possible to use hot air no matter which material it is used. The packaging material may have an outer plastic layer which may have the function to keep the product against from the carton material, but it may also be the function to seal the packaging material.

The sealing of the packaging material may need two surfaces which merge together. At least one of the surfaces is heated at a certain temperature to melt the plastic and be able to stick together with the other surface by pressure. In this process there may be different important factors. According to non-limiting examples, the important factors may be the temperature at which the material is heated, the area of which the material is heated, the speed of the heating process and the ambient temperature.

According to yet another non-limiting example, the important factors that may affect the quality of the sealing may preferably be the temperature and the area that is heated. By controlling these two parameters the sealing process may be secured with a higher probability.

In conventional systems there is not any integrated control in the filling machine neither of the temperature that the plastic surface of the packaging material nor if the area that is heated is the right one. There is only control of the energy delivered to the material (in case of aluminium material) or the temperature of the air that is used to heat the plastic surface. The quality control may then be done manually by the operators with a certain interval.

The present disclosure has the capacity to measure the temperature of the plastic of the packaging material, not only in one point but in all the area that is heated and also the surroundings. As previously disclosed, the data recording means 306 may comprise the heat camera. According to a non-limiting example, the heat camera may be based on IR technology. The camera may be located so that it is focused on the area where the sealing must take place. The area has a rectangular shape, which is 4-5 times wider than the heated area and 2-3 times longer than the heated area. Thus, the heat camera may be configured to monitor the area of the packaging material that may be heated but also the surrounding area of the heated area.

The heat camera may be configured to measure a temperature of the packaging material. The checked area may be divided in small fractions which can be called pixels. Each pixel may be an individual temperature sensor. The temperature value represents the average temperature of that pixel area. The total area has a specific number of pixels wide and long. According to one non-limiting example, the pixels wide and long may be 80 x 60 pixels.

The camera may be installed at a certain distance from the packaging material. This distance may be important to calculate as well as to calibrate the dimension of the focused area. This dimension is calculated by the equation below:
W = D * tan (25) * 2, wherein W is a wide distance and D is a distance from the camera to the surface, and
H = D * tan (19.5) * 2, wherein H is a high distance and D is the distance from the camera to the surface.

Wherein each fraction of pixel may have then a certain dimension and this is calculated by:
Wp = W/80, wherein Wp is pixel wide, and
Hp = H/60, wherein Hp is pixel high.

Based on the type of packaging material and which machine that may be used, there may be a certain area that may be crucial to be heated at a specific temperature. This area has a rectangular shape and has a specific dimension. By mapping that area fraction by fraction with the heat camera it may be possible to monitor the entire area temperature.

The quality control system 400 illustrated in Fig. 4 may have a measuring interval of as fast as 27 milliseconds. In each capture the reading value of each pixel may be updated. The system can make a copy of all the values and store them in an array of data, together with the capturing timestamp. This array may then be transferred to the database 402.For each package volume and machine setup there may be a required sealing area and temperature that may be predefined in order to have a sealing with quality. That predefined area and temperature parameters may be saved in the memory of the control unit 308. When the quality control system 400 may be ready to run the control unit 308, it may choose the right recipe of parameters and transfer them to an array of data. Then this array may be compared with the current parameters when the material may be sealed, and the control unit 308 may calculate the deviations of temperature for all the pixels. This comparison is further illustrated in Fig. 5 by way of examples.

A method for performing a quality control of a longitudinal seal of a packaging material, the method comprising:
mapping an area, fraction by fraction, of the packaging material using a heat camera;
generating a total area by combining each fraction of the mapped area;
dividing the total area into a plurality of pixels;
measuring, by using the heat camera and temperature sensors, a temperature of each pixel of the plurality of pixels;
generating a total temperature by combining each temperature of each pixel of the plurality of pixels;
comparing the total area with a predetermined sealing area and the total temperature with a predetermined temperature;
if a match is found between the two comparisons, the quality control of the longitudinal seal is approved.

The method may further comprise storing the total area and the total temperature in a database 402.

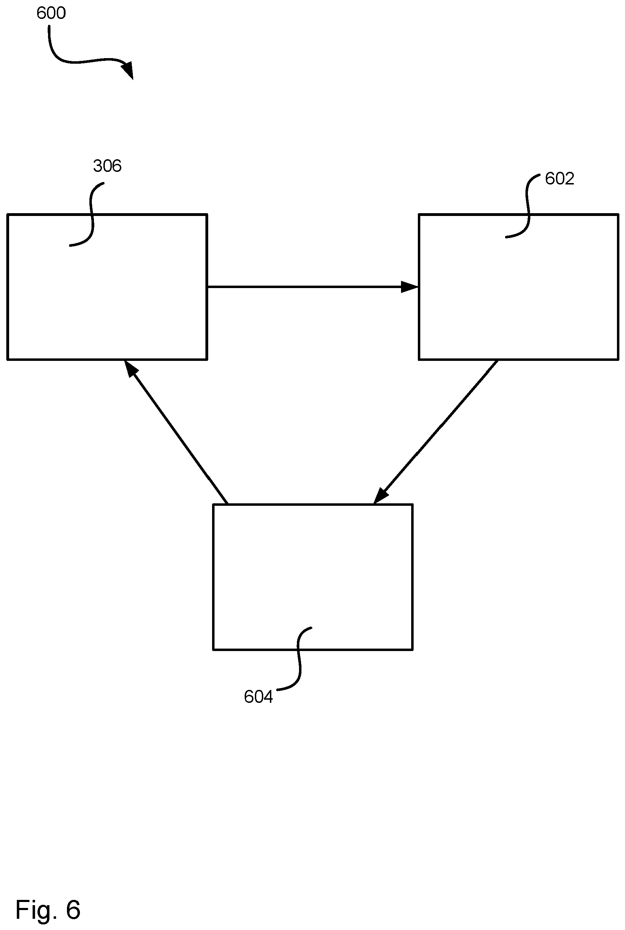

With reference to Fig. 6, a quality control system 600 configured to perform a quality control of a longitudinal seal of a packaging material is illustrated by way of examples. The quality control system 600 may comprise the data recording means 306, a machine controller 602 and a sealing process 604. The recording means 306 may be configured to transmit a temperature array transfer to the machine controller 602. The machine controller 602 may be configured to transmit a sealing power control to the sealing process 604. The sealing process may be configured to transmit a temperature reading to the recording device 306. As non-limiting examples, the results of the calculations can be used in three different ways. Thus, the controller can give an alarm and stop the machine if the sealing of the material is not correct or it can just give a warning and waste the packages that had not the right sealing quality. The results can be used as a process control parameter and adjust the power source setting to make a correction and minimize the deviation from the predefined temperature. It may be possible to check if the heating area is located in the correct place. If that may not be the case, there may be an adjusting device that moves the inductor or the heating element the distance needed to be moved in the right location.

From the description above follows that, although various embodiments of the invention have been described and shown, the invention is not restricted thereto, but may also be embodied in other ways within the scope of the subject-matter defined in the following claims.

## Claims

1. A method for monitoring and optionally controlling the longitudinal seal (302) of a package material in a packaging and filling machine (100), wherein the packaging and filling machine (100) comprising an aseptic chamber, comprising the steps of:
providing in the aseptic chamber a longitudinal seal (302) to a package material using a sealing device, wherein opposite longitudinal side edges of a packaging material are provided with said seal to forming the packaging material into a tubular form, and the longitudinal seal extends in a direction conforming to a direction of flow of the packaging material;
monitoring the longitudinal seal (302) of the package material in a tubular form using data recording means (306) positioned outside the aseptic chamber and a fiber optic cable (304) with one end attached to the data recording means (306) and in the opposite end adapted to monitor the longitudinal seal (302) extending in a direction conforming to a direction of the flow of the packaging material; and
optionally controlling the longitudinal seal (302) of the package material in a tubular form using a control unit (308), wherein the control unit (308) receives data from the data recording means (306) and correlate the received data with at least a predetermined set point value to provide output data determining the longitudinal seal's condition, and optionally displaying the output data for a user, which user may be connected to a network.

2. The method according to claim 1, further including controlling, via the control unit (308), the longitudinal sealing device to adjust the amount of heating and/or electricity to produce the longitudinal seal, preferably by increasing or decreasing the heating temperature and/or increasing or decreasing electricity amount.

3. The method according to claim 1 or 2, further including controlling, via the control unit (308), the packaging and filling machine (100) to shut it down, and optionally start it up again, to allow the longitudinal sealing device to adjust the amount of heating and/or electricity to produce the longitudinal seal (302), preferably by increasing or decreasing the heating temperature and/or increasing or decreasing electricity amount.

4. The method according to any one of claims 1-3, further including controlling, via the control unit (308), a discarding device, which remove from the packaging and filling machine (100) an amount of finished filled packages produced during a time period of defect longitudinal seal indicated by the control unit (308) based on received data correlated with said at least predetermined set point value(s).

## Patentansprüche

1. Verfahren zum Überwachen und wahlweisen Steuern der Längsversiegelung (302) eines Verpackungsmaterials in einer Verpackungs- und Befüllungsmaschine (100), wobei die Verpackungs- und Befüllungsmaschine (100) eine aseptische Kammer umfasst, das die folgenden Schritte umfasst:
Bereitstellen einer Längsversiegelung (302) an einem Verpackungsmaterial unter Verwendung einer Versiegelungsvorrichtung in der aseptischen Kammer, wobei gegenüberliegende Längsseitenkanten eines Verpackungsmaterials mit der Versiegelung versehen werden, um das Verpackungsmaterial in einer Röhrenform auszubilden, und die Längsversiegelung sich in einer Richtung erstreckt, die mit einer Flussrichtung des Verpackungsmaterials übereinstimmt;
Überwachen der Längsversiegelung (302) des Verpackungsmaterials in einer Röhrenform unter Verwendung von Datenaufzeichnungsmitteln (306), die außerhalb der aseptischen Kammer angeordnet sind, und eines Lichtleiterfaserkabels (304), wobei ein Ende davon an den Datenaufzeichnungsmitteln (306) befestigt ist und es im anderen Ende ausgelegt ist, die Längsversiegelung (302), die sich in einer Richtung erstreckt, die mit einer Richtung des Flusses des Verpackungsmaterials übereinstimmt, zu überwachen; und
wahlweise Steuern der Längsversiegelung (302) des Verpackungsmaterials in einer Röhrenform unter Verwendung einer Steuereinheit (308), wobei die Steuereinheit (308) Daten von den Datenaufzeichnungsmitteln (306) empfängt und die empfangenen Daten mit mindestens einem vorgegebenen Einstellungspunktwert korreliert, um Ausgangsdaten bereitzustellen, die den Zustand der Längsversiegelung bestimmen, und wahlweise Anzeigen der Ausgangsdaten für einen Benutzer, wobei der Benutzer mit einem Netz verbunden sein kann.

2. Verfahren nach Anspruch 1, das ferner das Steuern der Längsversiegelungsvorrichtung, den Betrag der Erwärmung und/oder der elektrischen Energie, um die Längsversiegelung zu erzeugen, vorzugsweise durch Erhöhen oder Absenken der Heiztemperatur und/oder Erhöhen oder Verringern des Betrags der elektrischen Energie, einzustellen, über die Steuereinheit (308) umfasst.

3. Verfahren nach Anspruch 1 oder 2, das ferner das Steuern der Verpackungs- und Befüllungsmaschine (100), sie auszuschalten und sie wahlweise neu in Betrieb zu nehmen, um zu ermöglichen, dass die Längsversiegelungsvorrichtung den Betrag der Erwärmung und/oder der elektrischen Energie, um die Längsversiegelung (302) zu erzeugen, vorzugsweise durch Erhöhen oder Absenken der Heiztemperatur und/oder Erhöhen oder Verringern des Betrags der elektrischen Energie, einstellt, über die Steuereinheit (308) umfasst.

4. Verfahren nach einem der Ansprüche 1-3, das ferner das Steuern einer Verwurfsvorrichtung, die eine Menge fertiggestellter, befüllter Verpackungen, die während eines Zeitraums mit fehlerhafter Längsversiegelung erzeugt worden sind, der durch die Steuereinheit (308) auf der Grundlage von empfangenen Daten angegeben wird, die mit dem/den mindestens einen vorgegebenen Einstellungspunktwert(en) korreliert sind, aus der Verpackungs- und Befüllungsmaschine (100) entfernt, über die Steuereinheit (308) umfasst.

## Revendications

1. Procédé de surveillance et facultativement de commande du scellement longitudinal (302) d'un matériau d'emballage dans une machine d'emballage et de remplissage (100), la machine d'emballage et de remplissage (100) comprenant une chambre aseptique, comprenant les étapes suivantes :
la fourniture dans la chambre aseptique d'un scellement longitudinal (302) sur un matériau d'emballage au moyen d'un dispositif de scellement, les bords latéraux longitudinaux opposés d'un matériau d'emballage étant pourvus dudit scellement pour donner au matériau d'emballage une forme tubulaire, et le scellement longitudinal s'étendant dans une direction conforme à une direction d'avancée du matériau d'emballage ;
la surveillance du scellement longitudinal (302) du matériau d'emballage de forme tubulaire à l'aide d'un moyen d'enregistrement de données (306) positionnés à l'extérieur de la chambre aseptique et d'un câble à fibre optique (304) dont une extrémité est fixée au moyen d'enregistrement de données (306) et dont l'extrémité opposée est conçue pour surveiller le scellement longitudinal (302) s'étendant dans une direction conforme à une direction d'avancée du matériau d'emballage ; et
facultativement, la commande du scellement longitudinal (302) du matériau d'emballage de forme tubulaire au moyen d'une unité de commande (308), l'unité de commande (308) recevant des données provenant du moyen d'enregistrement de données (306) et corrélant les données reçues avec au moins une valeur de consigne prédéterminée pour fournir des données de sortie déterminant l'état du scellement longitudinal, et facultativement affichant les données de sortie pour un utilisateur, lequel utilisateur pouvant être connecté à un réseau.

2. Procédé selon la revendication 1, comprenant en outre la commande, par l'intermédiaire de l'unité de commande (308), du dispositif de scellement longitudinal pour régler la quantité de chauffage et/ou d'électricité pour produire le scellement longitudinal, de préférence en augmentant ou diminuant la température de chauffage et/ou en augmentant ou diminuant la quantité d'électricité.

3. Procédé selon la revendication 1 ou 2, comprenant en outre la commande, par l'intermédiaire de l'unité de commande (308), de la machine d'emballage et de remplissage (100) pour l'arrêter, et facultativement la redémarrer, pour permettre au dispositif de scellement longitudinal de régler la quantité de chauffage et/ou d'électricité pour produire le scellement longitudinal (302), de préférence en augmentant ou diminuant la température de chauffage et/ou en augmentant ou diminuant la quantité d'électricité.

4. Procédé selon l'une quelconque des revendications 1 à 3, comprenant en outre la commande, par l'intermédiaire de l'unité de commande (308), d'un dispositif de mise au rebut, qui enlève de la machine d'emballage et de remplissage (100) une quantité d'emballages remplis finis produits pendant une période de scellement longitudinal défectueux indiquée par l'unité de commande (308) sur la base de données reçues corrélées avec ladite ou lesdites valeurs de consigne prédéterminées.
